# EUROPÄISCHE PATENTSCHRIFT

(11) **EP 2 996 870 B1**
(45) Veröffentlichungstag und Bekanntmachung des Hinweises auf die Patenterteilung: **11.08.2021**
(21) Anmeldenummer: 14722550.2
(22) Anmeldetag: 24.04.2014
(51) Int. Cl.: B31B 50/16, B31B 50/88

(54) **VERFAHREN UND VORRICHTUNG ZUR HERSTELLUNG VON VERPACKUNGEN FÜR TABAKPRODUKTE**
METHOD AND DEVICE FOR MAKING PACKAGES FOR TOBACCO PRODUCTS
PROCÉDÉ ET DISPOSITIF DE FABRICATION D'EMBALLAGES POUR DES PRODUITS À BASE DE TABAC

(30) Priorität: 15.05.2013 DE 102013008250
(43) Veröffentlichungstag der Anmeldung: 23.03.2016
(73) Patentinhaber: Focke & Co. (GmbH & Co. KG), 27283 Verden (DE)
(72) Erfinder: SCHNEIDER, Christoph, 27283 Verden (DE); VOLKMANN, Bernd, 28309 Bremen (DE); LINCK, Christian, 27283 Verden (DE); SAWADSKY, Andreas, 28832 Achim (DE)
(74) Vertreter: Aulich, Martin
(86) Internationale Anmeldenummer: PCT/EP2014/001090
(87) Internationale Veröffentlichungsnummer: WO 2014/183830

(56) Entgegenhaltungen:
- EP-A1- 1 698 450
- EP-A1- 2 511 088
- DE-A1-102004 061 951
- DE-A1-102009 030 069
- None

## Beschreibung

Die Erfindung betrifft ein Verfahren zur Herstellung von Verpackungen für Tabakprodukte gemäß dem Oberbegriff des Anspruchs 1, insbesondere für Zigarettenpackungen, bei dem mit Prägungen versehenes Verpackungsmaterial verwendet wird. Die Erfindung betrifft weiter eine Vorrichtung zur Durchführung der Verfahren gemäß dem Oberbegriff des Anspruchs 7.

Verfahren und Vorrichtungen der vorstehend genannten Art sind in unterschiedlichen Ausgestaltungen aus der Praxis bekannt. Die auf das Verpackungsmaterial aufgebrachten Prägungen schwanken häufig in ihrer Qualität, insbesondere verursacht durch Verschleißerscheinungen der Prägeeinrichtung. Zudem treten Toleranzen der Prägepositionen relativ zu dem Verpackungsmaterial auf oder Schwankungen der Position des Verpackungsmaterials und damit der Prägungen zu dem Maschinentakt bzw. zu Maschinenorganen, die im Maschinentakt arbeiten.

In der EP 1 698 450 A1 ist offenbart, in eine Materialbahn Prägemarken einzubringen, deren Positionen anschließend jeweils mit einem Sensor erfasst werden. Anhand der Sensorsignale wird eine Trennschnitteinrichtung mit dem Materialbahnvorschub synchronisiert, um prägemarken- bzw. lagegerechte Schnitte in die Materialbahn einzubringen.

In der DE 10 2004 061 951 A1 ist offenbart, bei Druckbögen von Druckmaschinen die Oberfläche der Druckbögen, in denen auch Prägungen vorhanden sein können, mit Licht zu bestrahlen, um Schattierungen in den Prägungen hervorzuheben. Anschließend wird ein Bild von der Oberfläche aufgenommen und dieses zur Erkennung von Fehlen mit einem Referenzbild verglichen.

Es ist Aufgabe der vorliegenden Erfindung, das eingangs genannte Verfahren und die eingangs genannte Vorrichtung weiterzuentwickeln, insbesondere im Hinblick auf eine möglichst zuverlässige Erfassung von Qualitäts- oder Positionsschwankungen der Prägungen.

Zur Lösung der genannten Aufgabe wird ein Verfahren mit den Merkmalen des Anspruchs 1 vorgeschlagen. Die Aufgabe wird des Weiteren gelöst durch eine Vorrichtung mit den Merkmalen des Anspruchs 7.

Erfindungsgemäß ist vorgesehen, das Verpackungsmaterial zu bzw. entlang einer Prüfeinrichtung zu fördern. Mit der Prüfeinrichtung werden bevorzugt automatisch eine, mehrere oder sämtliche der Prägungen des Verpackungsmaterials geprüft, insbesondere im Hinblick auf die Position oder die Qualität der jeweiligen Prägung. Die Prüfung erfolgt, indem die jeweilige Prägung mit einer Beleuchtungseinrichtung der Prüfeinrichtung derart beleuchtet wird, dass sie ein Schattenbild wirft. Mittels eines elektrooptischen Prüforgans der Prüfeinrichtung, wie einer elektrooptischen Kamera, wird von der Prägung und von dem Schattenbild der Prägung dann ein elektronisches Bild aufgenommen. Das elektronische Bild wird anschließend mittels einer Auswerteeinheit bevorzugt automatisch nach Maßgabe vorbestimmter Kriterien ausgewertet. Hierbei werden geeignete Bildauswerteverfahren eingesetzt. In die Auswertung fließt unmittelbar oder mittelbar das Schattenbild oder wenigstens ein Bereich des Schattenbildes der Prägung ein.

Mit dieser besonderen Art der Prüfung der jeweiligen Prägung unter Einbeziehung des Schattenwurfes derselben kann deren Position oder deren Qualität besonders zuverlässig ermittelt werden.

Erfindungsgemäß ist das Verpackungsmaterial als fortlaufende Materialbahn ausgebildet, die durch eine Schneideinrichtung in einzelne Zuschnitte getrennt wird, beispielsweise in Kragenzuschnitte für Zigarettenpackungen. Die Position der einzelnen Trennschnitte relativ zur Materialbahn orientiert sich dabei an besonderen Prägungen, nämlich an Prägemarken. Bevorzugt ist dabei jedem (späteren) Zuschnitt der Materialbahn jeweils mindestens eine Prägemarke zugeordnet. In Längsrichtung der Materialbahn benachbarte Prägemarken sind in einem Abstand voneinander angeordnet, der einer Zuschnittlänge entspricht.

Neben solchen Prägemarken verfügt die Materialbahn regelmäßig über weitere Prägungen, beispielsweise Prägemuster, die insbesondere schmückenden oder informativen Charakter haben und üblicherweise an für die Konsumenten sichtbaren Stellen der Packungen angebracht sind.

Die vorgenannten Prägemarken, aber auch die weiteren Prägungen, werden bevorzugt innerhalb des Verpackungsprozesses von einer stromauf der Schneideinrichtung angeordneten Prägeeinrichtung auf die Materialbahn aufgebracht.

Alternativ ist auch denkbar, einzelne oder sämtliche Prägevorgänge außerhalb des Verpackungsprozesses durchzuführen. So könnten einige oder sämtliche Prägungen auch von einem Zulieferer der Materialbahnen bereits zuvor auf das Material aufgebracht werden.

Sämtliche Prägungen werden bevorzugt von ein und derselben bzw. von einer gemeinsamen Prägeeinrichtung innerhalb eines gemeinsamen Prägeprozesses auf das Verpackungsmaterial aufgebracht, sodass entsprechend die Relativpositionen von Prägemarken einerseits und weiteren Prägungen andererseits durchgängig konstant sind.

Die die Materialbahn in einzelne Zuschnitte trennende Schneideinrichtung ist regelmäßig an den Maschinentakt der Verpackungsmaschine gekoppelt. Im Prozess kann es allerdings passieren, dass die Position der Materialbahn relativ zur Schneideinrichtung, also ihre Relativ-Lage in Bezug auf den Maschinentakt bzw. auf den Takt der Schneideinrichtung, von einer Soll-Lage abweicht. Aufgrund dessen würden die Trennschnitte in solchen Fällen nicht an der jeweils richtigen Soll- bzw. an der richtigen Bahnposition erfolgen, sodass die Positionen insbesondere der schmückenden bzw. informativen Prägungen von Zuschnitt zu Zuschnitt ungewollt variieren würden. Weiter unterliegen die Prägeprozesse regelmäßig Lagetoleranzen, die zu ähnlichen Abweichungen führen können.

Um solche Abweichungen auszugleichen, ist erfindungsgemäß vorgesehen, mittels des vorgenannten Prüfverfahrens die jeweilige Ist-Position der jeweiligen Prägemarken zu ermitteln, insbesondere relativ zu dem Maschinentakt bzw. dem Schneideinrichtungstakt. Hierzu wird das elektronische Bild der Prägemarke und des zugeordneten Schattenbildes entsprechend analysiert bzw. die Ist-Lage aus dem elektronischen Bild abgeleitet bzw. ermittelt. Das Schattenbild der jeweiligen Prägemarke ermöglicht, diese Ermittlung durch geeignete Bildauswerteverfahren präzise durchzuführen. Ohne die Erzeugung und Einbeziehung der genannten Schattenbilder wäre dies nicht oder nur sehr schwierig möglich, da die Prägemarken in entsprechenden elektronischen Bildern andernfalls kaum identifizierbar sind.

Falls die Ist-Position der jeweiligen Prägemarke, insbesondere die Ist-Position relativ zum Maschinen- bzw. Schneideinrichtungstakt, eine vorbestimmte Bedingung nicht erfüllt, wird die aktuelle Bahnposition relativ zum Maschinentakt angepasst. Dies erfolgt durch Variation der Geschwindigkeit der Materialbahn nach Maßgabe der ermittelten Ist-Position, um auf diese Weise einen prägemarkengerechten Trennschnitt zu ermöglichen. Eine solche vorbestimmte Bedingung kann beispielsweise die Abfrage einschließen, ob die Ist-Position der Prägemarke einer bestimmten Soll-Position entspricht oder ob diese von dieser Soll-Position abweicht, insbesondere über ein vorbestimmtes Maß hinaus.

Konkret kann vorgesehen sein, den Ist-Abstand der Prägemarke zu einem ebenfalls in dem elektronischen Bild enthaltenen Referenzobjekt bzw. zu einer Referenzmarke zu ermitteln und mit einem Soll-Abstand zu diesem Referenzobjekt zu vergleichen. Wenn der Ist-Abstand von dem Soll-Abstand abweicht, insbesondere über ein vorbestimmtes Maß hinaus, wird in der obigen Weise die Bahnposition relativ zum Maschinentakt angepasst.

Ein solches Referenzobjekt bzw. eine solche Referenzmarke kann beispielsweise eine ortsfeste Referenzkante oder dergleichen sein, die im Prüffeld des Prüforgans angeordnet ist und deren Abbild entsprechend auch im elektronischen Bild enthalten ist.

Im Rahmen der Auswertung des jeweils aufgenommenen elektronischen Bildes werden bevorzugt Positionen von Helligkeitsübergängen zwischen der jeweiligen Prägung bzw. der Prägemarke und dem ihr zugeordneten Schattenbild ermittelt. So kann dann beispielsweise der Ist-Abstand zwischen dem ermittelten Helligkeitsübergang und dem in dem elektronischen Bild enthaltenen Referenzobjekt ermittelt werden und in der oben beschriebenen Weise mit dem Soll-Abstand zu diesem Referenzobjekt verglichen werden.

In weiterer Ausbildung der Erfindung ist vorgesehen, dass die Materialbahn in Längsrichtung voneinander beabstandete Druckmarken aufweist. Dabei ist jedem (späteren) Zuschnitt der Materialbahn jeweils mindestens eine Druckmarke zugeordnet. In Längsrichtung der Materialbahn sind benachbarte Druckmarken bevorzugt jeweils in einem Abstand zueinander angeordnet, der eine Zuschnittlänge entspricht. Zusammen mit den Druckmarken wird regemäßig noch mindestens eine schmückende oder informative Bedruckung aufgebracht.

Regelmäßig ist bereits das Ausgangsmaterial mit solchen Druckmarken versehen. Jeweils mindestens eine Druckmarke ist zudem jeweils mindestens einer der gegebenenfalls den Trennungsschnitt beeinflussenden Prägemarken räumlich zugeordnet. Die räumliche Zuordnung ist dabei zweckmäßigerweise derart gewählt, dass das von dem Prüforgan aufgenommene elektronische Bild neben der Prägemarke und dem ihr zugeordneten Schattenbild auch die zugeordnete Druckmarke umfasst. Im Rahmen der Auswertung des elektronischen Bildes kann dann ergänzend die Ist-Relativlage zwischen der Prägemarke und der ihr zugeordneten Druckmarke ermittelt werden. Beispielsweise kann hierzu der Ist-Abstand zwischen Prägemarke und Druckmarke bestimmt werden. Auf diese Weise kann beispielsweise geprüft werden, ob die Ist-Relativlage bzw. der Ist-Abstand einer vorbestimmten Bedingung entspricht, insbesondere einer Soll-Relativlage bzw. einem Soll-Abstand, oder hiervon über ein vorbestimmtes Maß hinaus abweicht. Wenn die Bedingung nicht erfüllt ist, wird bevorzugt ein Fehler gemeldet. In der Regel wird der entsprechende Bahnabschnitt bzw. der entsprechende Zuschnitt anschließend aus dem Prozess ausgeschleust. Denn bei der genannten fehlerhaften Relativlage ist die Relativlage zwischen der Prägemarke/der Prägung und der zusätzlichen, gemeinsam mit der Druckmarke auf die Bahn aufgebrachten schmückenden oder informativen Bedruckung ebenfalls fehlerhaft.

Wie beschrieben weist das Verpackungsmaterial neben den Prägemarken regelmäßig noch weitere Prägungen auf, insbesondere ein oder mehrere Prägemuster. Insbesondere diese weiteren Prägemuster, aber grundsätzlich auch die Prägemarken selbst, können nicht nur im Hinblick auf ihre Position, sondern auch im Hinblick auf ihre Qualität geprüft werden. Zu diesem Zweck wird von der Auswerteeinheit bevorzugt die Form des in dem elektronischen Bild enthaltenen Ist-Schattenbildes der jeweiligen Prägung analysiert und überprüft, ob diese von einer in einem elektronischen Speicher hinterlegten Soll-Form abweicht, insbesondere über ein bestimmtes Maß hinaus. Denn der Schattenwurf ist für die jeweilige Prägung charakteristisch. Es können auf diese Weise insbesondere Fehlprägungen erkannt werden. Bevorzugt wird dabei im Rahmen der Auswertung das Ist-Schattenbild, wie es sich aus dem elektronischen Bild ergibt, mit einem Referenzschattenbild verglichen. Bei Abweichungen, die über ein bestimmtes Maß hinaus gehen, kann dann ein Fehler gemeldet werden.

In weiterer Ausbildung der Erfindung wird die mindestens eine zu prüfende Prägung nacheinander aus unterschiedlichen Richtungen mit Licht der Beleuchtungsrichtung beleuchtet. Für jede unterschiedliche Beleuchtungsrichtung ergibt sich eine andere Position und regelmäßig eine andere Form des Schattenbildes. Das mindestens eine, jeweils für die jeweilige Beleuchtungsrichtung aufgenommene elektronische Bild bzw. die Form des in dem Bild jeweils enthaltenen Schattenbildes kann dann in der oben beschriebenen Weise entsprechend analysiert werden. Beispielsweise kann jedes Bild mit einem der jeweiligen Beleuchtungsrichtung zugeordneten Referenzschattenbild verglichen werden. In entsprechender Weise würde dann ein Fehler gemeldet werden, wenn ein oder mehrere dieser Ist-Schattenbilder, insbesondere über ein vorbestimmtes Maß hinaus, von dem jeweils zugeordneten Referenzschattenbild abweicht bzw. abweichen.

Unabhängig davon, ob die Prägung nur aus einer oder aber aus mehreren Beleuchtungsrichtungen beleuchtet wird, würde in Folge einer entsprechenden Fehlermeldung regelmäßig der Teil des Verpackungsmaterials, dessen Prägung als fehlerhaft erkannt worden ist, aus dem Verpackungsprozess ausgeschleust werden können.

Regelmäßig sind in Längs- bzw. in Förderrichtung des Verpackungsmaterials sich insbesondere jeweils über die volle oder nahezu volle Breite des Verpackungsmaterials (in Querrichtung) erstreckende, geprägte Bereiche angeordnet (Prägemuster(n) und/oder Prägemarke(n)), sowie entsprechend ungeprägte Bereiche. Insofern es sich bei dem Verpackungsmaterial um eine fortlaufende Materialbahn handelt, folgen die geprägten Bereiche und die ungeprägten Bereiche in Längs- bzw. Förderrichtung abwechselnd aufeinander.

In besonderer Weise kann das mit Prägungen versehene Verpackungsmaterial im Verpackungsprozess gefördert werden, insbesondere zur Schneideinrichtung. Hierzu wird mindestens eine rotierende Förderwalze eingesetzt, die entlang ihres Umfangs über mindestens ein rotierendes Mitnehmersegment verfügt, das das Verpackungsmaterial während einer entsprechenden Teilrotation der Förderwalze mitführt. Während dieser Teilrotation bewegt sich das Mitnehmersegment entlang des Verpackungsmaterials, greift an diesem an und berührt dieses unter Mitnahme desselben.

Die Bewegungen der Förderwalze sind dabei mittels einer geeigneten Steuereinrichtung derart auf das Verpackungsmaterial abgestimmt, dass das rotierende Mitnehmersegment ausschließlich ungeprägte Bereiche des Verpackungsmaterials mitführt bzw. ausschließlich an ungeprägten Bereichen angreift. Hierdurch wird verhindert, dass die Prägungen durch die Förderwalze abflachen bzw. Schaden nehmen.

Weiter ist vorgesehen, dass die Bewegungen der Förderwalze über die Steuereinrichtung derart auf das Verpackungsmaterial abgestimmt sind, dass ein Freisegment der Förderwalze auf einen geprägten Bereich des Verpackungsmaterials gerichtet ist bzw. diesem gegenüber liegt, wenn es im Zuge einer Teilrotationsbewegung der Förderwalze an dem Verpackungsmaterial entlang bewegt wird. Das Freisegment ist ein Segment, das insbesondere während der Teilrotationsphase, in der es an dem Verpackungsmaterial vorbeibewegt wird, von dem Verpackungsmaterial beabstandet ist, dieses also nicht berührt und mitführt. Auf diese Weise läuft das Verpackungsmaterial entsprechend während dieser Phase an der Förderwalze frei.

Mit anderen Worten weist die Förderwalze entlang ihres Umfangs bzw. in Umfangsrichtung nacheinander mehrere Segmente auf, nämlich mindestens ein Mitnehmersegment, das das Verpackungsmaterial mitführt, sobald es in einer ersten Teilphase der Rotationsbewegung der Förderwalze an dem Verpackungsmaterial entlang geführt wird, sowie ein Freisegment, das in einer entsprechenden anderen Teilrotationsphase den Freilauf des Verpackungsmaterials ermöglicht.

Bevorzugt weist die Förderwalze eine zylindrische Umfangsfläche auf, in der die Freisegmente jeweils als sich insbesondere über die volle Breite der Förderwalze erstreckende, nach radial innen gerichtete Freimachungen bzw. Aussparungen ausgebildet sind. Die Rotationsachse der Förderwalze verläuft dabei quer zur Förderrichtung des Verpackungsmaterials, sodass die Walze die volle Breite des Verpackungsmaterial abdeckt.

Vorzugsweise sind mehrere solcher Freisegmente in identischen Winkelabständen über den Umfang verteilt angeordnet, d.h. die Winkel zwischen benachbarten Freisegmenten sind jeweils identisch. Zwischen zwei benachbarten Freisegmenten befindet sich dann jeweils ein Mitnehmersegment als Teilfläche der äußeren zylindrischen Umfangsfläche der Walze.

Gemäß einer weiteren Ausführungsform können mindestens zwei derartige Förderwalzen vorgesehen sein. Die Förderwalzen sind im Verpackungsprozess in Förderrichtung hintereinander angeordnet. Insbesondere, wenn es sich bei dem Verpackungsmaterial um eine fortlaufende Materialbahn handelt, die mittels der Schneideinrichtung in einzelne Zuschnitte getrennt wird, sind sie derart gesteuert bzw. aufeinander abgestimmt/ synchronisiert, dass das Mitnehmersegment der einen Förderwalze während einer ersten Phase die Materialbahn in einem nicht geprägten Bereich mitführt, während gleichzeitig in dieser ersten Phase die Materialbahn an der anderen Förderwalze frei läuft, d.h. von dieser nicht berührt wird, da das Freisegment der anderen Förderwalze entlang der Materialbahn rotiert wird.

Dabei ist der Abstand zwischen den Förderwalzen so gewählt, dass das Freisegment in dieser Phase auf einen geprägten Bereich gerichtet ist, dieser insofern in den Bereich des Freisegments "eintaucht" bzw. an der Förderwalze ohne Berührung vorbeiläuft, sodass der geprägte Bereich keinen Schaden nimmt.

In einer späteren zweiten Phase übernimmt dann die andere Förderwalze den Vorschub der Materialbahn durch Mitnahme derselben in einem ungeprägten Bereich und die erste Förderwalze lässt die Materialbahn, nämlich einen geprägten Bereich derselben, entsprechend frei bzw. berührungslos vorbeilaufen. Demnach übernimmt während einer ersten Phase die eine Förderwalze den Vorschub der Materialbahn, während einer zweiten Phase die andere Förderwalze. Natürlich können - insbesondere abhängig von der Anzahl in Umfangsrichtung angeordneter Segmente - auch drei oder mehr Förderwalzen in dieser Weise aufeinander abgestimmt werden.

Neben den beiden beschriebenen Hauptphasen kann es noch Übergangsphasen zwischen diesen Phasen geben, in denen kurzeitig beide bzw. sämtliche Förderwalzen gemeinsam den Vorschub der Materialbahn durch entsprechende Mitnahme der Förderbahn in jeweils ungeprägten Bereichen übernehmen. In diesen Übergangsphasen müssen die Förderwalzen zwingend die gleiche Geschwindigkeit aufweisen.

Insbesondere in diesen Übergangsphasen können durch identische Beschleunigung der Walzen oder identisches Abbremsen der Walzen die Geschwindigkeit der Materialbahn entsprechend vergrößert oder verringert werden. Hierdurch können dann - wie weiter oben bereits beschrieben - eventuelle Fehlstellungen zwischen der aktuellen Materialbahnposition einerseits und dem Maschinentakt der Verpackungsmaschine bzw. der Schneideinrichtung andererseits ausgeglichen werden.

Alternativ ist auch denkbar, die Materialbahn während der obigen ersten oder zweiten Phase, in der nur eine Förderwalze für den Vorschub sorgt, durch entsprechende Beschleunigung bzw. durch entsprechendes Abbremsen eben dieser Walze zu beschleunigen bzw. abzubremsen. Die jeweils andere Förderwalze, an der die Materialbahn entsprechend frei läuft, sollte dann ebenfalls beschleunigen oder abbremsen, um für die nächste Übergangsphase wieder identische Geschwindigkeiten der Förderwalzen zu gewährleisten. Die die Materialbahn mitführende Förderwalze kann dann ohne Weiteres beschleunigt oder abgebremst werden, während die Materialbahn an der anderen Förderwalze frei läuft, sodass entsprechend die Materialbahn beschleunigt bzw. abgebremst werden kann.

Durch den Freilauf der Materialbahn an einer der Förderwalzen in der jeweiligen Phase wird insgesamt ermöglicht, die Förderwalzen jedenfalls zeitweise mit unterschiedlichen Geschwindigkeiten zu betreiben bzw. in diesen Phasen die Geschwindigkeiten aneinander anzupassen.

Weitere Merkmale der vorliegenden Erfindung ergeben sich aus den beigefügten Patentansprüchen, der nachfolgenden Beschreibung eines bevorzugten Ausführungsbeispiels sowie aus den beigefügten Zeichnungen. Darin zeigen:

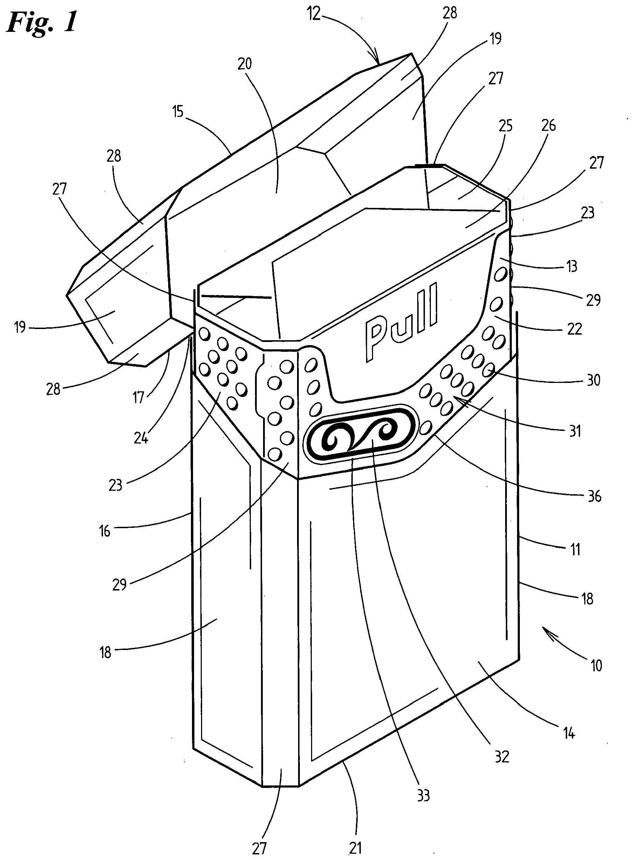

- Fig. 1: eine Zigarettenpackung in Schrägansicht mit Prägungen im oberen Kragenbereich,

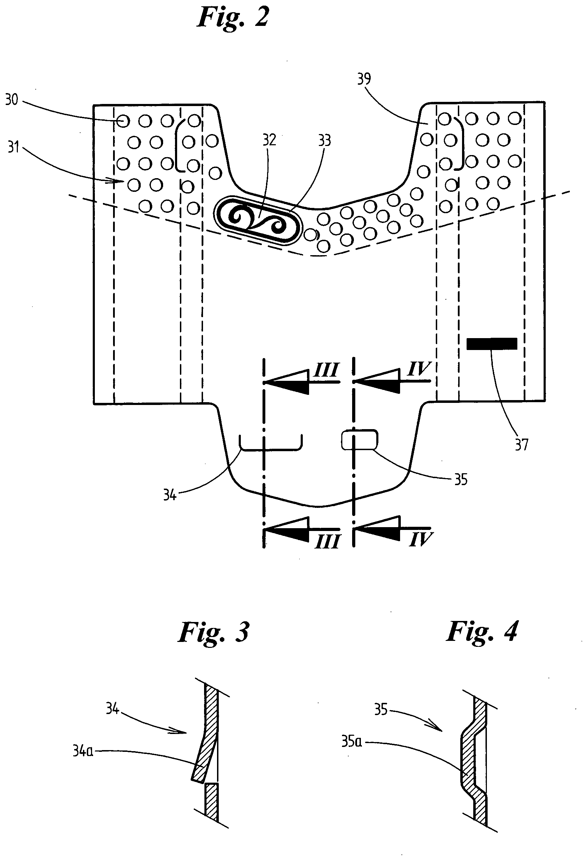

- Fig. 2: einen Kragenzuschnitt, wie er bei der Herstellung der Zigarettenpackung aus Fig. 1 verwendet wird,
- Fig. 3: einen Schnitt durch den Kragenzuschnitt aus Fig. 2 entlang der Schnittlinie III-III in Fig. 2,
- Fig. 4: einen Schnitt durch den Kragen aus Fig. 2 entlang der Schnittlinie IV-IV in Fig. 3,
- Fig. 5: eine Seitenansicht eines Teils einer Vorrichtung zum Verpacken von Zigaretten, in dem eine fortlaufende Materialbahn mit Prägungen versehen wird und in einzelne Zuschnitte getrennt wird,
- Fig. 6: eine Draufsicht auf die fortlaufende Materialbahn nach Prägung derselben sowie eine Draufsicht auf einen einzelnen, bereits von der Materialbahn abgetrennten Kragenzuschnitt,
- Fig. 7: die Einzelheit VII aus Fig. 5 in vergrößerter Darstellung, nämlich einen Bereich, in dem die fortlaufende Materialbahn in einzelne Kragenzuschnitte getrennt wird und in dem die erfindungsgemäße Prüfung der Prägungen erfolgt,
- Fig. 8: einen Schnitt durch die Darstellung aus Fig. 7 entlang der Schnittlinie VIII-VIII,
- Fig. 9: einen Teilbereich der Darstellung aus Fig. 8 in vergrößerter Form, nämlich der Abschnitt, in dem die erfindungsgemäße Prüfung der Prägungen erfolgt,
- Fig. 10: eine Darstellung entsprechend Fig. 9, allerdings mit alternativer Prüfeinrichtung,
- Fig. 11: ein Schnitt durch Fig. 10 entlang der Schnittlinie XI-XI, nämlich durch eine zu prüfende Prägung,
- Fig. 12: eine Draufsicht auf die Prägung aus Fig. 11 mit durch Beleuchtung von rechts erzeugtem Schattenbild,
- Fig. 13: eine Draufsicht auf die Prägung aus Fig. 11 mit durch Beleuchtung von links erzeugtem Schattenbild,
- Fig. 14: die Prägung aus Fig. 11, allerdings in fehlerhafter Ausbildung,
- Fig. 15: eine Draufsicht auf die fehlerhafte Prägung aus Fig. 14 mit durch Beleuchtung von rechts erzeugtem Schattenbild,
- Fig. 16: eine Draufsicht auf die fehlerhafte Prägung aus Fig. 14 mit durch Beleuchtung von links erzeugtem Schattenbild,
- Fig. 17: die Prägung aus Fig. 11 bzw. Fig. 14, allerdings in einer anderen fehlerhaften Ausbildung,
- Fig. 18: eine Draufsicht auf die fehlerhafte Prägung aus Fig. 17 mit durch Beleuchtung von rechts erzeugtem Schattenbild,
- Fig. 19: eine Draufsicht auf die fehlerhafte Prägung aus Fig. 17 mit durch Beleuchtung *von* links erzeugtem Schattenbild.

Die Erfindung wird am Beispiel der Fertigung einer Packung 10 für Zigaretten des Typs Hinge-Lid näher beschrieben. Von dem gesamten Fertigungs- oder Verpackungsprozess für Zigarettenpackungen bzw. Zigaretten wird nur der für die Erfindung wichtige Teil dargestellt. Die nicht beschriebenen Teilprozesse der Herstellung von Zigarattenpackungen können in konventioneller und dem Fachmann ohne Weiteres bekannter Weise umgesetzt sein.

Die Packung 10 besteht aus den Komponenten Schachtelteil 11, Deckel 12 und Kragen 13.

Sie verfügt über eine großflächige Vorderseite sowie eine gegenüberliegende Rückseite, die durch eine Schachtel-Vorderwand 14 und eine Deckel-Vorderwand 15 bzw. eine Schachtel-Rückwand 16 und eine Deckel-Rückwand 17 gebildet werden. Ferner weist die Packung 10 zwei gegenüberliegende Schmalseiten auf, die die Vorderwand 15 und die Rückwand 16 miteinander verbinden. Diese Schmalseiten werden durch Schachtel-Seitenwände 18 und Deckel-Seitenwände 19 gebildet. Ferner verfügt die Packung 10 über eine Deckel-Stirnwand 20 und eine Schachtel-Bodenwand 21.

Der Kragen 13 ist, wie bei Hinge-Lid-Packungen üblich, im Inneren des Schachtelteils 11 angeordnet und steht aus dem oben offenen Schachtelteil 11 heraus. In Schließstellung des Deckels 12 wird der Kragen 13 von diesem umfasst. Der Kragen 13 erstreckt sich im Bereich von Schachtel-Vorderwand 14 und Schachtel-Seitenwänden 18. Im Bereich der Schachtel-Rückwand 16 ist kein Kragen 13 angeordnet. Entsprechend wird der Kragen 13 durch eine Kragen-Vorderwand 22 und Kragen-Seitenwände 23 gebildet, die sich entlang entsprechender Wandungen des Schachtelteils 11 erstrecken.

Deckel 12 und Schachtelteil 11 sind im Bereich eines Liniengelenks 24 schwenkbar miteinander verbunden. Das Liniengelenk 24 erstreckt sich im Bereich der Rückseite der Packung 10, nämlich zwischen Schachtel-Rückwand 16 und Deckel-Rückwand 17.

Das Schachtelteil 11 dient als Aufnahmeraum für einen Packungsinhalt, nämlich im vorliegenden Fall für einen Zigarettenblock 25. Bei dem Zigarettenblock 25 handelt es sich um eine Gruppe von Zigaretten, die in eine gemeinsame Umhüllung bzw. einen Innerliner 26 eingehüllt ist.

Eine weitere Besonderheit des Ausführungsbeispiels besteht darin, dass es sich bei der Packung 10 um eine Oktagonal-Packung handelt, also eine Packung mit acht aufrechten Packungskanten im Bereich der Vorderseite, Rückseite bzw. Schmalseiten. Entsprechend sind im Übergang von der Vorderseite zu den Schmalseiten bzw. im Übergang von der Rückseite zu den Schmalseiten Schrägkanten ausgebildet, wodurch Schachtelteil 11, Deckel 12 und Kragen 13 entsprechende Schachtel-Schrägwände 27, Deckel-Schrägwände 28 und Kragen-Schrägwände 29 aufweisen.

Die Packung 10 kann auch andere Grundrissformen aufweisen, insbesondere einen Grundriss rechteckiger Gestalt, bei der dann die Schrägwände 27, 28, 29 fehlen und die Packungskanten rechtwinklig ausgebildet sind. Weiterhin kann die Packung 10 natürlich auch eine größere Anzahl an Schrägkanten 27, 28, 29 aufweisen.

Eine Besonderheit der Packung 10 besteht darin, dass der Kragen 13 Prägungen aufweist.

Zum einen sind dies vorliegend, über den Kragen 13 verteilt, einzelne punktartige Prägungen 30, die ein Prägemuster 31 ergeben. Weiterhin ist eine ein gedrucktes, dekoratives Element 32 umgebende Prägung 33 zu erkennen. Schließlich sind in den Kragen 13 Prägemarken 34, 35 eingebracht.

Das Prägemuster 31 erstreckt sich vorzugsweise vollflächig, insbesondere nahezu über die volle Kragenbreite, über einen Großteil des oberen, für den Konsumenten sichtbaren Bereichs des Kragens 13, d.h. vorliegend oberhalb einer Schließkante 36 des Schachtelteils 11. Auch das dekorative Element 32 mit umgebender Prägung 33 ist in diesem Bereich angeordnet.

Die Prägemarken 34, 35 dagegen sind im unteren Bereich des Kragens 13 angeordnet, der im fertigen Zustand der Packung 10 von der Schachtel-Vorderwand 14 überdeckt wird und somit nicht sichtbar ist.

Bei dem dekorativen Element 32 handelt es sich um eine Bedruckung, die zusammen mit einer Druckmarke 37 auf den Kragen 13 aufgebracht wird.

Hergestellt werden die Kragen 13, indem aus einer fortlaufenden Materialbahn 38 einzelne Zuschnitte 39 herausgetrennt werden.

Vorzugsweise werden die Bedruckungen, vorliegend das dekorative Element 32 und die Druckmarke 37, außerhalb des Verpackungsprozesses aufgebracht, d.h., in einem separaten Prozess, in dem die Materialbahn 38 hergestellt wird, auf die Materialbahn 38 aufgedruckt. Beispielsweise kann ein Zulieferer, der die Materialbahn 38 herstellt, die Bedruckungen 32, 37 aufbringen. Die Bedruckungen 32, 37 können aber natürlich auch im laufenden Verpackungsprozess erfolgen, in dem die Zigarettenpackungen 10 unter Befüllung mit entsprechenden Zigaretten produziert werden.

Die Materialbahn 38 ist in Längsrichtung in vorgegebenen Abständen mit den Bedruckungen 32, 37 versehen, wobei der Abstand zwischen zwei benachbarten identischen Bedruckungen, also beispielsweise zwei benachbarten dekorativen Elementen 32 und zwei benachbarten Druckmarken 37, der Länge eines einzelnen Zuschnitts 39 entspricht.

Vorzugsweise innerhalb des Verpackungsprozesses, im Bereich einer entsprechenden Verpackungsmaschine, wird die Materialbahn 38 mit den Prägungen 30, 33-35 versehen. Alternativ könnten die Prägungen 30, 33-35 allerdings auch außerhalb des eigentlichen Verpackungsprozesses vorgenommen werden, also beispielsweise ebenfalls von dem genannten Zulieferer.

Die Prägungen 30, 33-35 werden vorliegend vorzugsweise mittels einer Prägeeinrichtung 40 eingebracht, die ein Prägewalzenpaar 41 umfasst. Die Prägeeinrichtung 40 bzw. das Prägewalzenpaar 41 können dabei entsprechend der WO 2007/059820 A1 eingerichtet sein und betrieben werden. Zum Zwecke der vollständigen Offenbarung wird auf diese Veröffentlichung der Anmelderin Bezug genommen und der Inhalt derselben vollumfänglich in die vorliegende Anmeldung integriert.

Die Art der Prägemarken 34, 35 kann unterschiedlichster Natur sein. Für die Verwendung im erfindungsgemäßen Verfahren ist es allerdings notwendig, dass wenigstens ein Teilbereich der Prägemarke 34, 35 gegenüber der Ober- oder Unterseite der Materialbahn 38 bzw. gegenüber der Materialbahnebene erhaben bzw. erhöht ist, also gegenüber der Ober- oder Unterseite der Materialbahn 38 nach oben bzw. nach unten hervorsteht.

Im vorliegenden Ausführungsbeispiel ist die Prägung 34 durch einen in Draufsicht U-förmigen Einschnitt in die Materialbahn 38 eingebracht worden. Der an den Einschnitt angrenzende, nach oben vorstehende Prägemarkenabschnitt 34a ist als Lasche ausgebildet, wie sie beispielsweise im Rahmen eines Stanzvorgangs eingebracht werden kann.

Die Prägemarke 35 weist einen erhabenen Bereich 35a auf und ist durch einen ebenfalls an sich bekannten Prägevorgang erzeugt worden.

Wie an der Materialbahn 38 bzw. dem Zuschnitt 39 zu erkennen ist, weist die Materialbahn 38 bzw. der Zuschnitt 39 neben mit Prägungen 30, 33-35 versehenen Bereichen auch ungeprägte, d.h. von Prägungen 30, 33-35 freie Bereiche auf. In Längsrichtung der Materialbahn 38 bzw. in Förderrichtung folgt dabei nacheinander abwechselnd jeweils auf einen geprägten Bereich ein ungeprägter Bereich.

Die Materialbahn 38 für die Zuschnitte 39 bzw. Kragen 13 wird von einer Bobine 42 abgezogen und über Umlenkrollen 43 im Bereich einer vorliegend horizontalen Transportstrecke durch die Prägeeinrichtung 40 bzw. durch ein Paar von Prägewalzen 41 hindurchgeführt und mit den Prägungen 30, 33-35 versehen.

Im weiteren Verlauf wird die Materialbahn 38 entlang von weiteren Umlenkrollen 44 geführt und einer Prüfeinrichtung 45 zugeführt.

Mit der Prüfeinrichtung 45 können jeweils die Qualität und die die jeweilige Position der das Prägemuster 31 bildenden punktförmigen Prägungen 30, der das dekorative Element 32 umgebenden Prägung 33 sowie der Prägemarken 34, 35 überprüft werden. Weiter kann jeweils die Relativlage zwischen der Druckmarke 37 und den Prägemarken 34, 35 analysiert werden. Die Prüfvorgänge werden später noch näher beschrieben.

Im Anschluss an die Prüfeinrichtung 45 wird die mit den Prägungen 30, 33-35 bzw. den Bedruckungen 32, 37 versehene Bahn 38 mittels Förderwalzen 46, 47 einer Schneideinrichtung 48 zugeführt.

Die Schneideinrichtung 48 umfasst ein an sich bekanntes Messerwalzenpaar 48a, mit dem die einzelnen Zuschnitte 39 von der Materialbahn 38 abgetrennt werden.

Die Schneideinrichtung 48 ist an den Maschinentakt gekoppelt. Wichtig ist, dass die Trennschnitte immer an identischen, vorbestimmten Positionen der Materialbahn 38 erfolgen, um zu gewährleisten, dass die Prägungen 30, 33-35 - und letztlich auch die Bedruckung 32, 37 - an immer gleichen Positionen der fertigen Kragenzuschnitte 39 angeordnet sind.

Der Prägeprozess unterliegt allerdings definierten Lagetoleranzen. Um diese auszugleichen, sind die (in Querrichtung ein einer Flucht liegenden) Prägemarken 34, 35 auf der Materialbahn 38 angeordnet. An diesen Prägemarken 34, 35 orientiert sich der jeweilige Trennschnitt. Zu diesem Zweck erfasst - allgemein gesprochen - die ortsfeste Prüfeinrichtung 45 die Position der Prägemarken 34, 35, und zwar bezogen auf die Längsrichtung der Bahn 38. Entspricht die ermittelte Ist-Position derselben nicht einer bestimmten Bedingung, insbesondere nicht einer erwarteten Position, wird die Geschwindigkeit der Materialbahn 38 variiert, d.h. bedarfsweise entweder vergrößert oder verringert, um einen prägemarkengerechten bzw. einen korrekt positionierten Trennschnitt durch die taktweise arbeitende Schneideinrichtung 48 zu erreichen.

Die Prüfeinrichtung 45 umfasst eine Beleuchtungseinrichtung 49, die die Prägungen 30, 33-35, insbesondere die Prägemarken 34, 35, unter einem möglichst flachen Winkel zur Materialbahnebene bzw. vorliegend der Materialbahnoberseite mit (in der Regel sichtbarem) Licht bestrahlt. Die Beleuchtungseinrichtung umfasst dabei eine Lampe 50, deren Beleuchtungsrichtung sich entsprechend möglichst parallel zur Materialbahnebene 38 erstreckt.

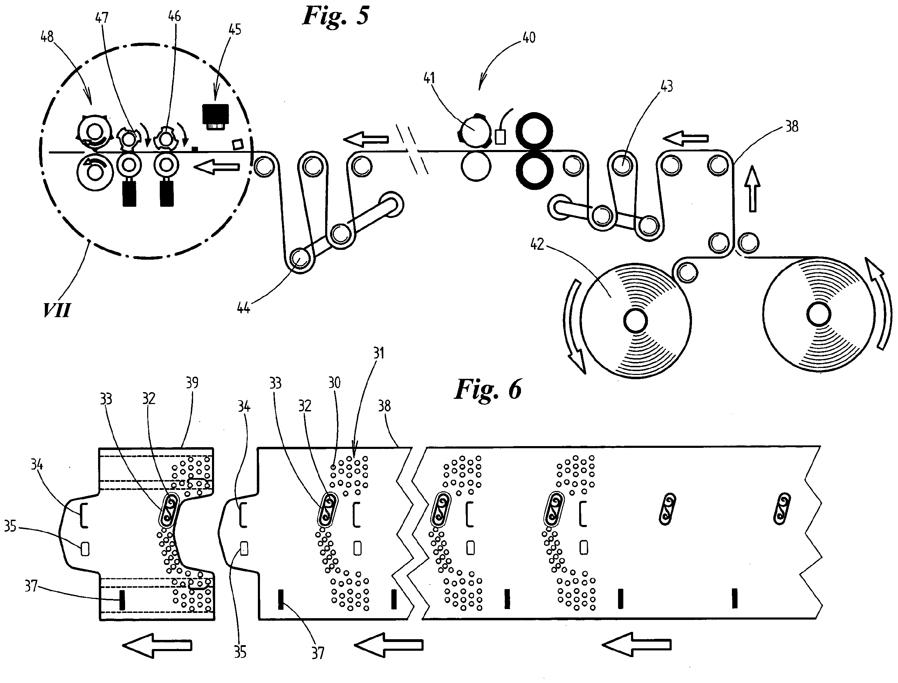

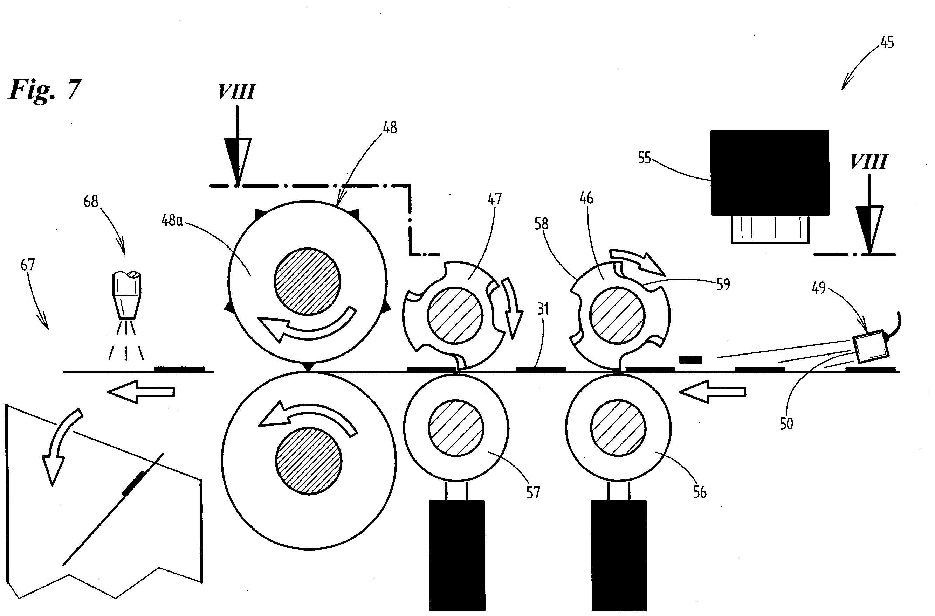

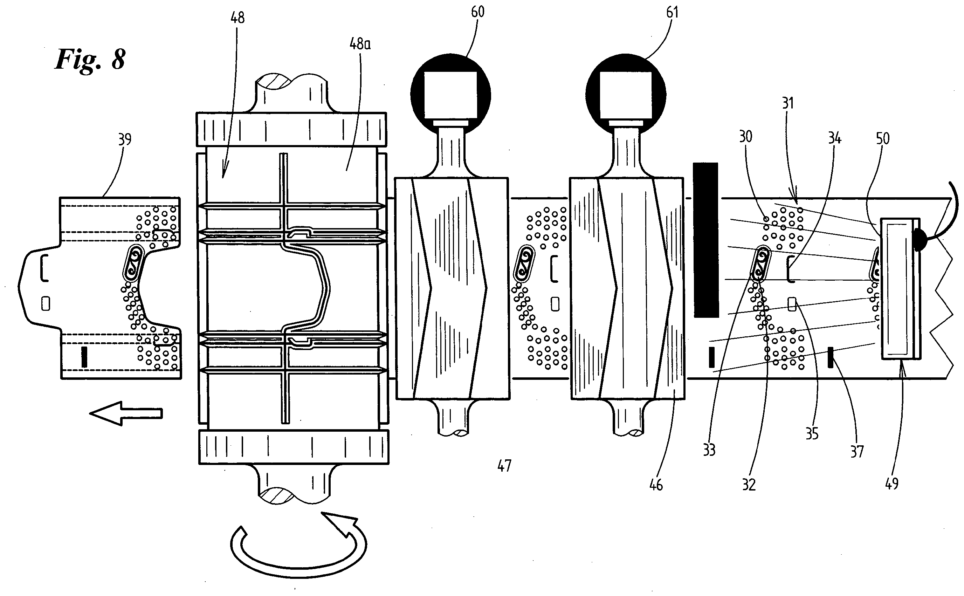

Im Ausführungsbeispiel gemäß der Fig. 5-9 ist die Lampe 50 knapp oberhalb der Materialbahn 38 angeordnet, und zwar mit Abstand hinter bzw. stromauf der zu prüfenden Prägungen 30, 33-35, sodass die Prägungen mit von hinten (bezogen auf die Förderrichtung) kommenden Licht beleuchtet werden.

Allgemein gesprochen ist die Beleuchtungseinrichtung 49, insbesondere die Lampe 50, so anzuordnen bzw. die Beleuchtungsrichtung und/oder der Beleuchtungswinkel so zu wählen, dass die Prägungen 30, 33-35 derart beleuchtet werden, dass sie jeweils einen Schatten werfen bzw. einen ausreichend großen, analysierbaren Schatten. Es hat sich gezeigt, dass hierfür Beleuchtungswinkel zur Materialbahnebene, die kleiner als 20° sind, besonders bevorzugt kleiner als 15°, besonders geeignet sind.

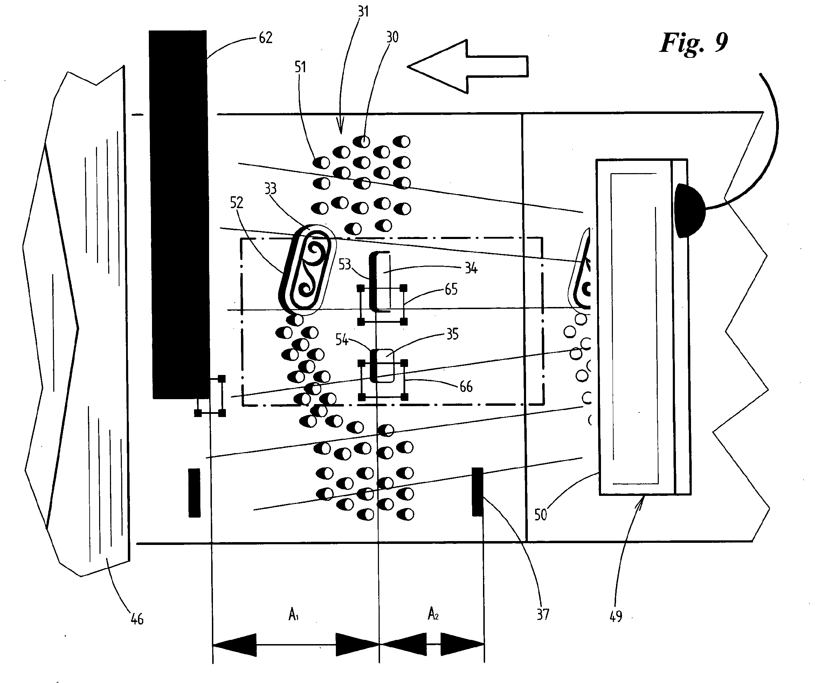

In Fig. 9 ist gut zu erkennen, dass die punktartigen Prägungen 30 die Schattenbilder 51 erzeugen, die das dekorative Element 32 umgebende Prägung 33 das Schattenbild 52 und die Prägungen 34, 35 die Schattenbilder 53 bzw. 54.

Eine elektrooptische Kamera 55 der Prüfeinrichtung 45 erzeugt vorzugsweise für jeden Zuschnitt 39 ein elektronisches Bild, auf dem die Prägemarken 30, 33-35, die Bedruckungen 32, 37 sowie *eine* ortsfeste Referenzmarke 62 zu erkennen ist, nämlich eine von einer ortsfesten Leiste oder dergleichen erzeugte Kante.

Die einzelnen aufgenommen elektronischen Bilder werden dann mit einer geeigneten Auswerteeinrichtung, die Teil der Steuereinrichtung der Verpackungsmaschine sein kann, ausgewertet.

Was die Auswertung im Hinblick auf die Prägemarken 34, 35 betrifft, so wird innerhalb von Prüffenstern 65, 66 nach für die Schattenbilder 53, 54 bzw. die Prägungen 34, 35 charakteristischen hell-dunkel Übergängen gesucht. Dann wird der Abstand A₁ zwischen diesen hell-dunkel Übergängen und der ortsfesten Referenzmarke 52 ermittelt. Dieser Abstand wird verglichen mit einem vorgegebenen Soll-Abstand bzw. einem vorgegebenen Soll-Abstandsintervall.

Sollte es zu Abweichungen kommen bzw. zu Abweichungen, die ein vorbestimmtes Maß überschreiten, wird die Geschwindigkeit der Materialbahn 38 kurzzeitig variiert, um den sich andernfalls aus der Abweichung ergebenen, unerwünschten Versatz des nachfolgenden Trennschnitts der Schneideinrichtung 48 zur Soll-Trennschnittlage auszugleichen.

Vorzugsweise jede der Prägemarken 34, 35 der Materialbahn 38 wird auf diese Weise geprüft und bei Bedarf jeweils die Geschwindigkeit der Materialbahn 38 nach Maßgabe der jeweiligen Ist-Position der geprüften Prägemarken 34, 35 variiert.

Die Variation bzw. Anpassung der Geschwindigkeit der Materialbahn 38 nach Maßgabe der jeweiligen Ist-Position der Prägemarken 34, 35 wird dabei erreicht - wie zuvor bereits angedeutet -, indem die Geschwindigkeit mindestens einer der Förderwalzen 46, 47 angepasst wird.

In diesem Zusammenhang wird eine weitere wichtige Besonderheit der Erfindung erläutert. Sie umfasst die Ausbildung und das Zusammenspiel der beiden Walzen 46, 47. Jeder der Walzen 46, 47 ist jeweils eine gegenüberliegende Andrückwalze 56, 57 zugeordnet. Die Materialbahn 38 wird demnach jeweils zwischen der Förderwalze 46 und der ihr gegenüberliegenden Andrückwalze 56 hindurch gefördert bzw. anschließend zwischen der Förderwalze 47 und der dieser gegenüberliegenden Andrückwalze 57.

Jede Förderwalze 46, 47 verfügt entlang ihrer Umfangsfläche vorliegend über jeweils drei, jeweils um ca. 90° versetzt angeordnete Mitnehmersegmente 58.

Weiter verfügen die Förderwalzen 46, 47 über ihren Umfang verteilt über ebenfalls um ca. 90° zueinander versetzt angeordnete Freisegmente 59, nämlich im vorliegenden Fall Aussparungen. Die Länge der Aussparungen in Umfangsrichtung ist dabei an die jeweilige Länge des jeweiligen geprägten Bereichs der Materialbahn 38 angepasst. Dies derart, dass der geprägte Bereich vollständig in die Freisegmente bzw. Aussparungen 59 eintauchen kann, ohne von der Förderwalze 46 bzw. 47 berührt zu werden.

Während einer jeweiligen Teilrotationsphase der Förderwalzen 46, 47, nämlich jeweils während das entsprechende Mitnehmersegment 58 auf die Materialbahn 38 zu. gerichtet ist, führt das jeweils einzelne Mitnehmersegment 58 die Materialbahn 38 unter Berührung derselben mit.

Die Materialbahn 38 einerseits und die Förderwalzen 46, 47 sind dabei derart gesteuert bzw. aufeinander abgestimmt, dass während der jeweiligen Teilrotationsphase der Förderwalze 46, 47, in der die Bahn 38 durch Berührung mit dem jeweiligen Mitnehmersegment 58 mitgeführt wird, von dem jeweiligen Mitnehmersegment 58 ausschließlich die ungeprägten Bereiche der Materialbahn 38 berührt werden.

Während der Teilrotationsphase dagegen, in der die Freisegmente 59 jeweils der Materialbahn 38 gegenüberliegen, tauchen die geprägten Bereiche in das entsprechende Freisegment 39 bzw. in die entsprechende Ausnehmung 59 der Förderwalzen 46, 47 ein, sodass die Materialbahn 38 frei läuft.

Eine weitere Besonderheit ist, dass die Förderwalzen 46, 47 so gesteuert bzw. synchronisiert sind, dass in einer ersten Hauptphase das Mitnehmersegment 58 der einen Förderwalze 46, 47 an der Materialbahn 38 anliegt bzw. diese berührt, während an der jeweils anderen Förderwalze 46, 47 die Materialbahn 38 frei läuft, also der geprägte Bereich entsprechend in die Ausnehmung 59 eintaucht.

In einer zweiten Hauptphase läuft die Materialbahn an der entsprechend anderen Förderwalze 46, 47 frei bzw. wird von der entsprechend anderen Förderwalze 46, 47 mitgeführt.

Zwischen diesen Hauptphasen gibt es kurze Übergangsphasen, in denen die Materialbahn 38 von beiden Förderwalzen 46, 47 mitgeführt wird.

Neben den beiden beschriebenen Hauptphasen kann es noch Übergangsphasen zwischen diesen Phasen geben, in denen kurzeitig beide bzw. sämtliche Förderwalzen 46, 47 gemeinsam den Vorschub der Materialbahn 38 durch entsprechende Mitnahme der Förderbahn 38 in jeweils ungeprägten Bereichen übernehmen. In diesen Übergangsphasen müssen die Förderwalzen 46, 47 zwingend die gleiche Geschwindigkeit aufweisen.

Insbesondere in diesen Übergangsphasen kann durch identische Beschleunigung der Walzen 46, 47 oder identisches Abbremsen derselben die Geschwindigkeit der Materialbahn 38 entsprechend variiert bzw. vergrößert oder verringert werden. Hierdurch können dann eventuelle Fehlstellungen zwischen der aktuellen Materialbahnposition einerseits und dem Maschinentakt der Verpackungsmaschine bzw. der Schneideinrichtung 48 andererseits ausgeglichen werden. Alternativ ist auch denkbar, die Materialbahn 38 während der obigen ersten oder zweiten Hauptphase, in der nur eine Förderwalze 46, 47 für den Vorschub sorgt, durch entsprechende Beschleunigung bzw. durch entsprechendes Abbremsen eben dieser Walze 46, 47 zu beschleunigen bzw. abzubremsen. Die jeweils andere Förderwalze 46, 47, an der die Materialbahn 38 entsprechend frei läuft, sollte dann ebenfalls beschleunigen oder abbremsen, um für die nächste Übergangsphase wieder identische Geschwindigkeiten der Förderwalzen 46, 47 zu gewährleisten. Die die Materialbahn 38 mitführende Förderwalze 46, 47 kann dann ohne Weiteres beschleunigt oder abgebremst werden, während die Materialbahn 38 an der anderen Förderwalze 46, 47 frei läuft, sodass entsprechend die Materialbahn 38 beschleunigt bzw. abgebremst werden kann.

Die Förderwalzen 46, 47 werden über geeignete Antriebe, vorliegend Servomotoren 60, 61, angetrieben, sodass deren Geschwindigkeiten unabhängig voneinander anpassbar sind.

Im Rahmen der Auswertung des elektronischen Bildes kann ergänzend zu der Erfassung der Ist-Lage der Prägemarken 34, 35 im Übrigen auch die Ist-Relativlage zwischen den Prägemarken 34, 35 und der Druckmarke 37 ermittelt werden. Beispielsweise kann hierzu der Ist-Abstand A₂ zwischen den Prägemarken 34, 35 und der Druckmarke 37 bestimmt werden. Auf diese Weise kann beispielsweise geprüft werden, ob diese Ist-Relativlage bzw. dieser Ist-Abstand einer vorbestimmten Bedingung entspricht, insbesondere einer Soll-Relativlage bzw. einem Soll-Abstand, oder hiervon über ein vorbestimmtes Maß hinaus hiervon abweicht.

Wenn die Bedingung nicht erfüllt ist, wird der entsprechende Bahnabschnitt bzw. der entsprechende Zuschnitt 39 anschließend aus dem Verpackungsprozess ausgeschleust, vorliegend mittels einer Ausschleuseeinrichtung 67 mit Ausblaseinheit 68. Denn bei der genannten fehlerhaften Relativlage ist beispielsweise die Relativlage zwischen der der Bedruckung 32 und der diese umgebenden Prägung 33 ebenfalls fehlerhaft.

Neben der oben dargestellten Prüfung der Ist-Postionen insbesondere der Prägemarken 34, 35 können sämtliche Prägungen 30, 33-35 auch im Hinblick auf ihre Qualität geprüft werden. Zu diesem Zweck wird bevorzugt die Form des jeweils in dem elektronischen Bild enthaltenen Ist-Schattenbildes 51-54 der jeweiligen Prägung 30, 33-35 analysiert und überprüft, ob diese von einer Soll-Form abweicht, insbesondere über ein bestimmtes Maß hinaus. Denn der Schattenwurf ist für die jeweilige Prägung 30, 33-35 charakteristisch. Es können auf diese Weise insbesondere Fehlprägungen erkannt werden. Bevorzugt wird dabei im Rahmen der Auswertung das jeweilige Ist-Schattenbild 51-54, wie es sich aus dem *elektronischen* Bild ergibt, jeweils mit einem zugeordneten Referenzschattenbild verglichen. Bei Abweichungen, die über ein bestimmtes Maß hinaus gehen, kann dann ein Fehler gemeldet werden.

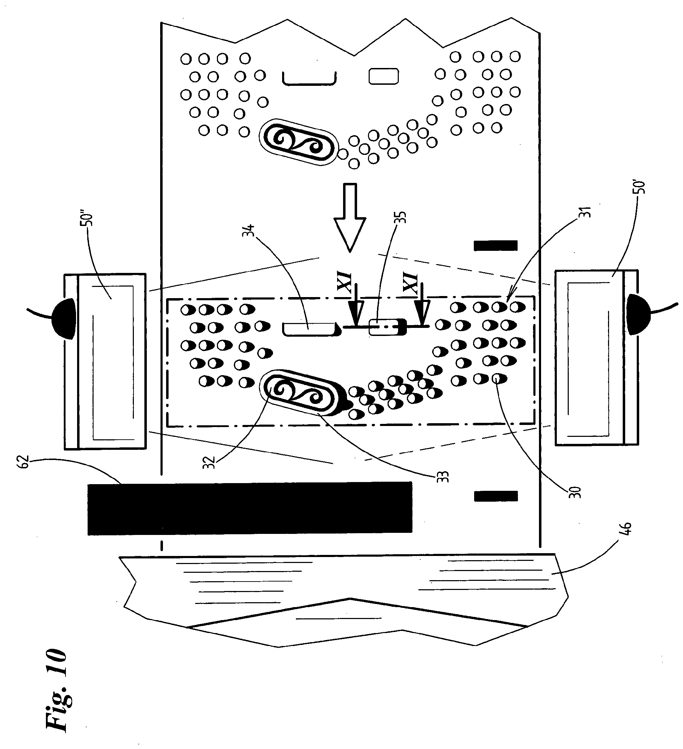

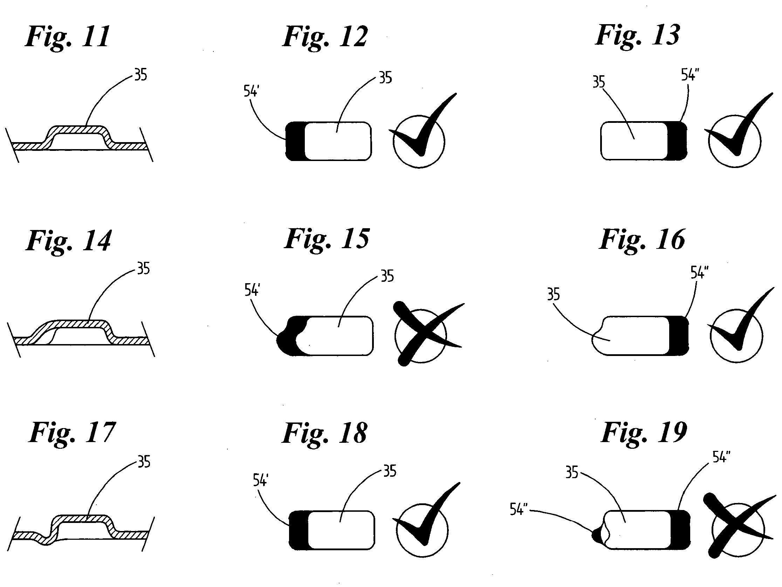

In weiterer Ausbildung dieses Gedankens kann die mindestens eine zu prüfende Prägung, in den Fig. 11-19 beispielsweise die Prägemarke 35, nacheinander aus unterschiedlichen Richtungen mit Licht der Beleuchtungsrichtung 49 beleuchtet werden. Wie in Fig. 10 angedeutet, könnte hierfür die Beleuchtungseinrichtung 49 beispielsweise über mehrere, beispielsweise jeweils an einer der beiden Längsseiten der Materialbahn 38 angeordnete Lampen 50' bzw. 50" verfügen. Für jede unterschiedliche Beleuchtungsrichtung (Fig. 12, 15, 18 Beleuchtung von links durch Lampe 50', Fig. 13, 16, 19 Beleuchtung von rechts durch Lampe 50") ergibt sich eine andere Position und regelmäßig eine andere Form des entsprechenden Schattenbildes 54' bzw. 54". Das mindestens eine, jeweils für die jeweilige Beleuchtungsrichtung aufgenommene elektronische Bild bzw. die Form des in dem Bild jeweils enthaltenen Schattenbildes 54', 54" kann dann jeweils in der oben beschriebenen Weise entsprechend analysiert werden. Beispielsweise kann jedes Bild 54', 54" mit einem der jeweiligen Beleuchtungsrichtung zugeordneten Referenzschattenbild verglichen werden.

In den Fig. 12 bzw. 13 sind Schattenbilder 54', 54" zu erkennen, wie sie bei Beleuchtung von links bzw. rechts für das Beispiel der fehlerfreien Prägemarke 35 entsprechend Fig. 11 entstehen. Die Prüfeinrichtung 45 würde entsprechend keinen Fehler melden.

Es würden Fehler gemeldet werden, wenn eines oder mehrere der Ist-Schattenbilder 54', 54", insbesondere über ein vorbestimmtes Maß hinaus, von dem jeweils zugeordneten Referenzschattenbild abweicht bzw. abweichen.

Solche auf einen Fehler hinweisende Schattenbilder 54', 54" sind beispielhaft in den Fig. 15 und 19 dargestellt.

Während bei dem Fehler der Prägung 35 entsprechend Fig. 14 eine Beleuchtung von rechts einen Schattenwurf 54" produziert, der keinen Fehler erkennen lässt, vgl. Fig. 16, ist dies bei einer Beleuchtung von links anders, vgl. Fig. 15. Der Schatten 54' weicht von einem Schatten, wie er sich bei einer fehlerfreien Prägemarke 35 ergeben würde, deutlich ab.

Ähnliches gilt für den Fehler der Prägemarke 35 entsprechend Fig. 17, wobei dieser Fehler mit einer Beleuchtung von links nicht detektierbar ist, vgl. Fig. 18, wohl aber mit einer Beleuchtung von rechts, vgl. Fig. 19.

Unabhängig davon, ob die Prägungen 30, 33-35 nur aus einer oder aber aus mehreren Beleuchtungsrichtungen beleuchtet wird, würde in Folge einer entsprechenden Fehlermeldung regelmäßig der Teil des Verpackungsmaterials, dessen Prägung als fehlerhaft erkannt worden ist, mittels der Ausschleuseeinrichtung 67 aus dem Verpackungsprozess ausgeschleust werden können.

Es wird darauf hingewiesen, dass die beschriebenen Verfahren bevorzugt vollautomatisch mittels einer entsprechend ausgebildeten Steuereinrichtung und ggf. einer entsprechend ausgebildeten Auswerteeinheit ausgeführt werden. Die Auswerteeinrichtung kann dabei Teil der Steuereinrichtung sein. Sie kann aber auch eine separate Einheit sein, beispielsweise ein geeigneter Computer.

**Bezugszeichenliste**

| | | | |
|---|---|---|---|
| 10 | 10 Packung | 37 | Druckmarke |
| 11 | Schachtelteil | 38 | Materialbahn |
| 12 | Deckel | 39 | Zuschnitt |
| 13 | Kragen | 40 | Prägeeinrichtung |
| 14 | Schachtel-Vorderwand | 41 | Prägewalzenpaar |
| 15 | Deckel-Vorderwand | 42 | Bobine |
| 16 | Schachtel-Rückwand | 43 | Umlenkrolle |
| 17 | Deckel-Rückwand | 44 | Umlenkrolle |
| 18 | Schachtel-Seitenwände | 45 | Prüfeinrichtung |
| 19 | Deckel-Seitenwände | 46 | Förderwalze |
| 20 | Deckel-Stirnwand | 47 | Förderwalze |
| 21 | Schachtelbodenwand | 48 | Schneideinrichtung |
| 22 | Kragen- Vorderwand | 48a | Messerwalzenpaar |
| 23 | Kragen-Seitenwand | 49 | Beleuchtungseinrichtung |
| 24 | Liniengelenk | 50 | Lampe |
| 25 | Zigarettenblock | 50' | Lampe |
| 26 | Innerliner | 50" | Lampe |
| 27 | Schachtel-Schrägwände | 51 | Schattenbild |
| 28 | Deckel-Schrägwände | 52 | Schattenbild |
| 29 | Kragen-Schrägwände | 53 | Schattenbild |
| 30 | punktartige Prägung | 54 | Schattenbild |
| 31 | Prägemuster | 54' | Schattenbild |
| 32 | dekoratives Element | 54" | Schattenbild |
| 33 | umgebende Prägung | 55 | Kamera |
| 34 | Prägemarke | 56 | Andrückwalze |
| 34a | Prägemarkenabschnitt | 57 | Andrückwalze |
| 35 | Prägemarke | 58 | Mitnehmersegment |
| 35a | Prägemarkenabschnitt | 59 | Freisegment |
| 36 | Schließkante | 60 | Servomotoren |
| 61 | | Servomotoren | |
| 62 | | Kante | |
| 65 | | Prüffenster | |
| 66 | | Prüffenster | |
| 67 | | Ausschleuseeinrichtung | |
| 68 | | Ausblaseinheit | |
| | | | |
| A₁ | | Abstand | |
| A₂ | | Abstand | |

## Patentansprüche

1. Verfahren zur Herstellung von Verpackungen für Tabakprodukte, insbesondere für Zigarettenpackungen, bei dem mit Prägungen (30, 33-35) versehenes Verpackungsmaterial (38) eingesetzt wird, wobei das Verpackungsmaterial (38) als fortlaufende Materialbahn entlang einer insbesondere an den Maschinentakt gekoppelten Schneideinrichtung (48) gefördert wird, die die Materialbahn (38) in einzelne Zuschnitte (39) trennt, wobei von einer Prägeeinrichtung (40) auf die Materialbahn (38), bevorzugt stromaufwärts in demselben Herstellungsprozess, jeweils in Längsrichtung voneinander beabstandete, jeweils die Position eines Trennschnittes beeinflussende Prägemarken (34, 35) aufgebracht werden, die insbesondere taktweise in einer Prüfeinrichtung (45) geprüft werden, entlang der das Verpackungsmaterial (38) gefördert wird, wobei von der jeweiligen zu prüfenden Prägemarke (34, 35) mittels eines Prüforgans (55), bevorzugt einer elektrooptischen Kamera, mindestens ein elektronisches Bild aufgenommen und nach Maßgabe vorbestimmter Kriterien ausgewertet wird, wobei im Rahmen der Auswertung die Ist-Position der Prägemarke (34, 35) ermittelt wird, und wobei für den Fall, dass die Ist-Position der Prägemarke (34, 35) eine vorbestimmte Bedingung nicht erfüllt, bevorzugt von einer vorgegebenen Soll-Position abweicht, insbesondere über ein vorbestimmtes Maß hinaus, die Geschwindigkeit der Materialbahn (38) nach Maßgabe der ermittelten Ist-Position variiert wird, um einen prägemarkengerechten Trennschnitt der Materialbahn (38) zu erzielen,
**dadurch gekennzeichnet,**
a) **dass** die jeweilige zu prüfende Prägemarke (34, 35) mittels einer Beleuchtungseinrichtung (49) derart beleuchtet wird, dass sie ein Schattenbild (51-54") wirft,
b) **dass** das mindestens eine elektronische Bild von der Prägemarke (34, 35) und dem Schattenbild (51-54") der Prägemarke (30, 34) aufgenommen wird, und
c) **dass** die Ist-Position der Prägemarke (34, 35) jeweils im Rahmen der Auswertung des mindestens einen, von der Prägemarke (34, 35) und dem Schattenbild (53-54") der Prägemarke (34, 35) aufgenommenen elektronischen Bildes ermittelt werden.

2. Verfahren gemäß Anspruch 1, **dadurch gekennzeichnet, dass** im Rahmen der Prüfung, ob die vorbestimmte Bedingung erfüllt ist, der Ist-Abstand der Prägemarke (34, 35) zu einem in dem elektronischen Bild enthaltenen Referenzobjekt (62) ermittelt und mit einem Soll-Abstand zu diesem Referenzobjekt (62) verglichen wird, insbesondere der Abstand in Längsrichtung der Materialbahn (38), wobei vorzugsweise das Referenzobjekt (62) ein Abbild eines ortsfesten Referenzobjektes ist, das innerhalb eines von dem Prüforgan (55) erfassten, die Prägemarke (34, 35) sowie den ihr zugeordneten Schatten (53-54") umfassenden Prüfbereichs angeordnet ist.

3. Verfahren gemäß einem oder mehreren der weiteren Ansprüche, **dadurch gekennzeichnet, dass** im Rahmen der Auswertung des jeweiligen elektronischen Bildes Helligkeitsübergänge zwischen der Prägung (30, 33-35), insbesondere der Prägemarke (34, 35), und dem ihr zugeordneten Schattenbild (51-54") ermittelt werden, wobei vorzugsweise der Ist-Abstand zwischen dem Helligkeitsübergang und einem in dem elektronischen Bild enthaltenen Referenzobjekt (62) ermittelt und mit dem Soll-Abstand zu diesem Referenzobjekt (62) verglichen wird.

4. Verfahren gemäß einem oder mehreren der vorhergehenden Ansprüche, **dadurch gekennzeichnet, dass** die Materialbahn (38) in Längsrichtung beabstandete Druckmarken (37) aufweist, wobei jeweils mindestens eine Druckmarke (37) jeweils mindestens einer der gegebenenfalls den Trennungsschnitt beeinflussenden Prägemarken (34, 35) räumlich derart zugeordnet ist, dass das von dem Prüforgan (55) aufgenommene elektronische Bild neben der Prägemarke (34, 35) und dem ihr zugeordneten Schattenbild (53-54") auch die zugeordnete Druckmarke (37) umfasst, wobei im Rahmen der Auswertung des elektronischen Bildes der Abstand der Prägemarke (34, 35), insbesondere in Längsrichtung der Materialbahn (38), zu der ihr zugeordneten Druckmarke (37) ermittelt wird und geprüft wird, ob er einer vorbestimmten Bedingung entspricht, insbesondere einem Soll-Abstand.

5. Verfahren gemäß einem oder mehreren der vorhergehenden Ansprüche, **dadurch gekennzeichnet, dass** die mindestens eine Prägung (30, 33-35), insbesondere ein oder mehrere Prägemuster (31), im Hinblick auf ihre Qualität geprüft wird, indem die Form des in dem elektronischen Bild enthaltenen Ist-Schattenbilds (51-54") der Prägung analysiert wird, insbesondere, indem das Ist-Schattenbild (51-54") mit einem Referenzschattenbild verglichen wird, wobei vorzugsweise das Verpackungsmaterial (38) oder ein Teilabschnitt desselben, insbesondere ein von dem Verpackungsmaterial abgetrennter Zuschnitt (39), aus dem Verpackungsprozess ausgeschleust wird, falls ein Ist-Schattenbild (51-54") von dem zugeordneten Referenzschattenbild abweicht, insbesondere über ein vorbestimmtes Maß hinaus.

6. Verfahren gemäß Anspruch 5, **dadurch gekennzeichnet, dass** die zu prüfende Prägung (30, 33-35) nacheinander aus unterschiedlichen Richtungen mit Licht der Beleuchtungseinrichtung (49) beleuchtet wird, insbesondere aus sich um wenigstens 45°, bevorzugt wenigstens 90° unterscheidenden Beleuchtungsrichtungen, und dass für jede unterschiedliche Beleuchtungsrichtung mindestens ein elektronisches Bild der Prägung (30, 33-35) sowie des jeweils zugeordneten Schattenbildes (51-54") aufgenommen wird, und dass das Ist-Schattenbild (51-54") der Prägung (30, 33-35) in jedem dieser elektronischen Bilder analysiert wird, insbesondere jeweils mit einem jeweils zugeordneten Referenzschattenbild verglichen wird.

7. Vorrichtung zur Herstellung von Verpackungen für Tabakprodukte, insbesondere für Zigarettenpackungen, unter Verwendung von mit Prägungen (30, 33-35) versehenem Verpackungsmaterial (38), zur Durchführung des Verfahrens gemäß der Ansprüche 1-6, **gekennzeichnet durch** eine Prüfeinrichtung (45), entlang der das Verpackungsmaterial (38) förderbar ist, und mit der mindestens eine der Prägungen (30, 33-35) geprüft wird, insbesondere im Hinblick auf die Position oder die Qualität der Prägung (30, 33-35), wobei die Prüfeinrichtung (45) eine Beleuchtungseinrichtung (49) aufweist, mit der die Prägung (30, 33-35) derart beleuchtbar ist, dass sie ein Schattenbild (51-54") wirft, ein Prüforgan (55), bevorzugt eine elektrooptische Kamera, mit der von der Prägung (30, 33-35) und dem Schattenbild (51-54") der Prägung (30, 33-35) mindestens ein elektronisches Bild aufnehmbar und eine Auswerteeinrichtung mit der das mindestens eine elektronische Bild nach Maßgabe vorbestimmter Kriterien auswertbar ist.

## Claims

1. A method for producing packagings for tobacco products, in particular for cigarette packs, where packaging material (38) which is provided with embossings (30, 33-35) is used, wherein the packaging material (38) is conveyed as a continuous material web along a cutting device (48), which is coupled in particular to the machine clock and separates the material web (38) into individual blanks (39), wherein embossed marks (34, 35), which are spaced apart from one another in each case in the longitudinal direction, in each case influence the position of a separating cut and are tested in particular in a cyclical manner in a testing device (45) along which the packaging material (38) is conveyed, are applied by an embossing device (40) onto the material web (38), in a preferred manner upstream in the same production process, wherein at least one electronic image is taken of the respective embossed mark (34, 35) to be tested by means of a testing body (55), preferably an electro-optical camera, and evaluated in accordance with predetermined criteria, wherein the actual position of the embossed mark (34, 35) is determined within the framework of the evaluation process, and wherein, in case that the actual position of the embossed mark (34, 35) does not meet a predetermined condition, in a preferred manner deviates from a predetermined required position, in particular beyond a predetermined extent, the speed of the material web (38) is varied in accordance with the determined actual position in order to achieve a separating cut in the material web (38) that is true to the embossed mark, **characterized in that**
a) the respective embossed mark (34, 35) to be tested is lit by means of a lighting device (49) in such a manner that it casts a shadow image (51-54"),
b) at least one electronic image is taken of the embossed mark (34, 35) and of the shadow image (51-54") of the embossed mark (34, 35), and
c) the actual position of the embossed mark (34, 35) is determined in each case within the framework of the evaluation of the at least one electronic image taken of the embossed mark (34, 35) and of the shadow image (53-54") of the embossed mark (34, 35).

2. The method as claimed in claim 1, **characterized in that** within the framework of the testing as to whether the predetermined condition is met, the actual spacing between the embossed mark (34, 35) and a reference object (62) which is included in the electronic image is determined and is compared with a required spacing to said reference object (62), in particular the spacing in the longitudinal direction of the material web (38), wherein preferably the reference object (62) is an image of a stationary reference object which is arranged inside a testing region which is recorded by the testing body (55) and includes the embossed mark (34, 35) as well as the shadow (53-54") associated therewith.

3. The method as claimed in one or several of the further claims, **characterized in that** within the framework of the evaluation of the respective electronic image, brightness transitions between the embossing (30, 33-35), in particular the embossed mark (34, 35), and the shadow image (51-54") associated therewith are determined, wherein preferably the actual spacing between the brightness transition and a reference object (62) which is included in the electronic image is determined and compared with the required spacing to said reference object (62).

4. The method as claimed in one or several of the preceding claims, **characterized in that** the material web (38) comprises print marks (37) which are at a spacing in the longitudinal direction, wherein in each case at least one print mark (37) is associated spatially in each case with at least one of the embossed marks (34, 35), which, where applicable, influence the separating cut, in such a manner that the electronic image taken by the testing body (55) also includes the associated print mark (37) along with the embossed mark (34, 35) and the shadow image (53-54") associated therewith, wherein within the framework of the evaluation of the electronic image, the spacing between the embossed mark (34, 35), in particular in the longitudinal direction of the material web (38), and the print mark (37) associated therewith is determined and tested as to whether it corresponds to a predetermined condition, in particular a required spacing.

5. The method as claimed in one or several of the preceding claims, **characterized in that** the at least one embossing (30, 33-35), in particular one or several embossing patterns (31), is tested with regard to its quality by the form of the actual shadow image (51-54") of the embossing which is included in the electronic image being analyzed, in particular, by the actual shadow image (51-54") being compared with a reference shadow image, wherein preferably the packaging material (38) or a part portion of the same, in particular a blank (39) which has been separated off from the packaging material, is ejected out of the packaging process if an actual shadow image (51-54") deviates from the associated reference shadow image, in particular beyond a predefined extent

6. The method as claimed in claim 5, **characterized in that** the embossing (30, 33-35) to be tested is lit successively with light from the lighting device (49) from different directions, in particular from lighting directions which differ by at least 45°, in a preferred manner by at least 90°, and **in that** at least one electronic image of the embossing (30, 33-35) as well as of the respectively associated shadow image (51-54") is taken for each different lighting direction, and **in that** the actual shadow image (51-54") of the embossing (30, 33-35) in each of said electronic images is analyzed, in particular in each case is compared with a respectively associated reference shadow image.

7. A device for producing packagings for tobacco products, in particular for cigarette packs, using packaging material (38) which is provided with embossings (30, 33-35) for carrying out the method according to claims 1 - 6, **characterized by** a testing device (45), along which the packaging material (38) is conveyable, and with which at least one of the embossings (30, 33-35) is tested, in particular with regard to the position or the quality of the embossing (30, 33-35), wherein the testing device (45) comprises a lighting device (49), by way of which the embossing (30, 33-35) can be lit in such a manner that it casts a shadow image (51-54"), a testing body (55), in a preferred manner an electro-optical camera, by way of which at least one electronic image can be taken of the embossing (30, 33-35) and of the shadow image (51-54") of the embossing (30, 33-35) and an evaluating device by way of which the at least one electronic image can be evaluated in accordance with predetermined criteria.

## Revendications

1. Procédé de fabrication d'emballages pour des produits à base de tabac, en particulier pour des paquets de cigarettes, dans lequel un matériau d'emballage (38) muni de gravures (30, 33 à 35) est mis en œuvre, le matériau d'emballage (38) étant acheminé sous la forme d'une bande de matériau continue le long d'un dispositif de découpe (48) couplé en particulier à la cadence de la machine et séparant la bande de matériau (38) en découpes (39) individuelles, un dispositif de gravure (40) appliquant sur la bande de matériau (38), de préférence en amont dans le même processus de fabrication, des repères gravés (34, 35) respectivement espacés les uns des autres dans la direction longitudinale, respectivement influençant la position d'une coupe de séparation, qui sont contrôlés en particulier par intermittence dans un dispositif de contrôle (45) le long duquel le matériau d'emballage (38) est acheminé, au moins une image électronique du repère de gravure (34, 35) respectif à contrôler étant prise au moyen d'un élément de contrôle (55), de préférence d'une caméra électro-optique, et évaluée conformément à des critères prédéterminés, dans lequel, dans le cadre de l'évaluation, la position réelle du repère de gravure (34, 35) est déterminée, et si la position réelle du repère de gravure (34, 35) ne satisfait pas à une condition prédéterminée, de préférence si elle s'écarte d'une position théorique prédéfinie, en particulier dans une mesure prédéterminée, la vitesse de la bande de matériau (38) est amenée à varier conformément à la position réelle déterminée afin d'obtenir une coupe de séparation de la bande de matériau (38) au repère de gravure correct, **caractérisé en ce que**
a) le repère de gravure (34, 35) respectif à contrôler est éclairé au moyen d'un dispositif d'éclairage (49) de telle sorte qu'il projette une ombre (51 à 54"),
b) ladite au moins une image électronique du repère de gravure (34, 35) et de l'ombre (51 à 54") du repère de gravure (30, 34) est prise, et
c) la position réelle du repère de gravure (34, 35) est déterminée respectivement dans le cadre de l'évaluation de ladite au moins une image électronique prise du repère de gravure (34, 35) et de l'ombre (53 à 54") du repère de gravure (34, 35).

2. Procédé selon la revendication 1, **caractérisé en ce que** dans le cadre du contrôle si la condition prédéterminée est satisfaite, la distance réelle entre le repère de gravure (34, 35) et un objet de référence (62) contenu sur l'image électronique est déterminée et comparée avec une distance théorique par rapport à cet objet de référence (62), en particulier la distance dans la direction longitudinale de la bande de matériau (38), l'objet de référence (62) étant de préférence une reproduction d'un objet de référence stationnaire qui est disposé à l'intérieur d'une zone de contrôle détectée par l'élément de contrôle (55) et comprenant le repère de gravure (34, 35) ainsi que l'ombre (53 à 54") qui lui est associée.

3. Procédé selon une ou plusieurs des autres revendications, **caractérisé en ce que** dans le cadre de l'évaluation de l'image électronique respective, des transitions de luminosité entre la gravure (30, 33 à 35), en particulier le repère de gravure (34, 35), et l'ombre (51 à 54") qui lui est associée, sont déterminées, dans lequel de préférence la distance réelle entre la transition de luminosité et un objet de référence (62) contenu sur l'image électronique est déterminée et comparée avec la distance théorique par rapport à cet objet de référence (62).

4. Procédé selon une ou plusieurs des revendications précédentes, **caractérisé en ce que** la bande de matériau (38) présente des repères d'impression (37) espacés dans la direction longitudinale, respectivement au moins un repère d'impression (37) étant associé spatialement à respectivement au moins l'un des repères de gravure (34, 35) influençant éventuellement la coupe de séparation de telle sorte que l'image électronique prise par l'élément de contrôle (55) comprend en plus du repère de gravure (34, 35) et de l'ombre (53 à 54") qui lui est associée aussi le repère d'impression (37) associé, dans lequel, dans le cadre de l'évaluation de l'image électronique, la distance du repère de gravure (34, 35), en particulier dans la direction longitudinale de la bande de matériau (38) par rapport au repère d'impression (37) qui lui est associé, est déterminée, et on vérifie si elle correspond à une condition prédéterminée, en particulier à une distance théorique.

5. Procédé selon une ou plusieurs des revendications précédentes, **caractérisé en ce que** ladite au moins une gravure (30, 33 à 35), en particulier un ou plusieurs repères de gravure (31), est contrôlée quant à sa qualité **en ce que** la forme de l'ombre réelle (51 à 54") de la gravure, contenue sur l'image électronique, est analysée, en particulier **en ce que** l'ombre réelle (51 à 54") est comparée à une ombre de référence, dans lequel de préférence le matériau d'emballage (38) ou une section de celui-ci, en particulier une découpe (39) séparée du matériau d'emballage, est expulsée du processus d'emballage si une ombre réelle (51 à 54") s'écarte de l'ombre de référence associée, en particulier dans une mesure prédéterminée.

6. Procédé selon la revendication 5, **caractérisé en ce que** la gravure (30, 33 à 35) à contrôler est éclairée successivement à partir de différentes directions par la lumière du dispositif d'éclairage (49), en particulier à partir de directions d'éclairage différentes au moins de 45°, de préférence au moins de 90°, et **en ce que** pour chaque direction d'éclairage différente, au moins une image électronique de la gravure (30, 33 à 35) ainsi que de l'ombre respectivement associée (51 à 54") est prise, et **en ce que** l'ombre réelle (51 à 54") de la gravure (30, 33 à 35) est analysée sur chacune de ces images électroniques, en particulier respectivement comparée avec une ombre de référence respectivement associée.

7. Dispositif de fabrication d'emballages pour des produits à base de tabac, en particulier pour des paquets de cigarettes, en utilisant un matériau d'emballage (38) muni de gravures (30, 33 à 35), pour effectuer le procédé selon les revendications 1 à 6, **caractérisé par** un dispositif de contrôle (45) le long duquel le matériau d'emballage (38) peut être acheminé et qui permet de contrôler au moins l'une des gravures (30, 33 à 35), en particulier quant à la position ou à la qualité de la gravure (30, 33 à 35), le dispositif de contrôle (45) présentant un dispositif d'éclairage (49) qui permet d'éclairer la gravure (30, 33 à 35) de telle sorte qu'elle projette une ombre (51 à 54"), un élément de contrôle (55), de préférence une caméra électro-optique, qui permet de prendre au moins une image électronique de la gravure (30, 33 à 35) et de l'ombre (51 à 54") de la gravure (30, 33 à 35), et un dispositif d'évaluation qui permet d'évaluer ladite au moins une image électronique conformément à des critères prédéterminés.
